Europäisches Patentamt

European Patent Office

Office européen des brevets

(19)

(11) EP 1 376 499 A2

(12) EUROPÄISCHE PATENTANMELDUNG

(43) Veröffentlichungstag:
02.01.2004 Patentblatt 2004/01

(51) Int Cl.⁷: G07F 19/00

(21) Anmeldenummer: 03014039.6

(22) Anmeldetag: 23.06.2003

(84) Benannte Vertragsstaaten:
AT BE BG CH CY CZ DE DK EE ES FI FR GB GR
HU IE IT LI LU MC NL PT RO SE SI SK TR
Benannte Erstreckungsstaaten:
AL LT LV MK

(30) Priorität: 25.06.2002 DE 10229615

(71) Anmelder: Fiducia AG Karlsruhe/Stuttgart
76227 Karlsruhe (DE)

(72) Erfinder: Clauss, Wolfgang
73733 Esslingen (DE)

(74) Vertreter: Patentanwälte Bartels und Partner
Lange Strasse 51
70174 Stuttgart (DE)

(54) **Verfahren zur automatischen Abwicklung von Zahlungsvorgängen im Electronic Commerce sowie zugehöriges System**

(57) 1. Verfahren zur automatischen Abwicklung von Zahlungsvorgängen im Electronic Commerce sowie zugehöriges System.

2. Die Erfindung betrifft ein Verfahren zur automatischen Abwicklung von Zahlungsvorgängen im Electronic Commerce über ein elektronisches Datennetz (1), bei dem ein Kunde (K) mittels eines an das Datennetz (1) angeschlossenen Kundenterminals (2) über das Datennetz (1) ein Kaufangebot (3) an einen Händlerrechner (4) eines Händlers (H) überträgt, dadurch gekennzeichnet, daß für den Kunden (K) bei der Abgabe des Kaufangebots (3) an dem Kundenterminal (2) eine Bezahlungsart wählbar oder vorgegeben ist, bei der ein erster Teil (u) des Kaufpreises (P) im Wege einer durch elektronische Datenübertragung in Auftrag gegebenen Überweisung entrichtet wird und ein zweiter Teil (e) des Kaufpreises (P) im Wege einer durch elektronische Datenübertragung erteilten Einzugsermächtigung von einem Konto eines Geldinstitutes entrichtet wird, sowie ein zugehöriges System zur Ausführung des erfindungsgemäßen Verfahrens.

Fig. 3

EP 1 376 499 A2

**Beschreibung**

Die Erfindung betrifft ein Verfahren zur automatischen Abwicklung von Zahlungsvorgängen im Electronic Commerce zwischen einem Kunden und einem Händler über ein elektronisches Datennetz gemäß dem Oberbegriff des Anspruchs 1 sowie ein zugehöriges System zur Ausführung dieses Verfahrens.

Derzeit existieren verschiedene Verfahren, um im Electronic Commerce (e-commerce) Zahlungen zu leisten bzw. einen Zahlungsvorgang einzuleiten und abzuwickeln. Verbreitet sind derzeit insbesondere drei Verfahren: 1. Zahlung per Kreditkarte, 2. Zahlung per Rechnung, 3. Zahlung per Lastschrift. Bei diesen drei Verfahren liegt das Risiko einer nicht korrekten Zahlung, beispielsweise verspätet, ausbleibend oder fehlerhaft, primär beim Händler. Lediglich bei Zahlungen per Kreditkarte gehen die Risiken vollständig auf die Kreditkartengesellschaft über, die dafür allerdings entsprechende Risikokalkulationsaufschläge als Transaktionskosten in Rechnung stellt.

Andere Verfahren zur automatischen Abwicklung von Zahlungsvorgängen für kleine bis mittlere Beträge sind weltweit entwickelt worden, haben aber aus jeweils unterschiedlichen Gründen bisher keine nennenswerte Verbreitung gefunden.

Aus der DE 196 28 045 A1 ist ein Verfahren zur automatischen Abwicklung von Zahlungsvorgängen im Electronic Commerce über ein elektronisches Datennetz gemäß dem Oberbegriff des Anspruchs 1 bekannt. Die in dieser Druckschrift beschriebenen Möglichkeiten der sicheren Datenübertragung und Datenverwaltung einschließlich der beschriebenen Verschlüsselungsmethoden sind in dieser oder einer in der Zwischenzeit weiterentwickelten Form auch für die vorliegende Erfindung anwendbar, weshalb zur Vermeidung von Wiederholungen diesbezüglich vollumfänglich auf diese Druckschrift Bezug genommen wird und deren diesbezüglicher Offenbarungsgehalt mit in die vorliegende Anmeldung eingebunden ist.

Der Erfindung liegt das Problem zugrunde, ein für den Kunden, den Händler und den Überweisungsanbieter einfach handhabbares, schnelles, zuverlässiges und kostengünstiges Verfahren sowie ein zugehöriges System zur automatischen Abwicklung von Zahlungsvorgängen im Electronic Commerce über ein elektronisches Datennetz bereitzustellen, das darüber hinaus eine hohe Manipulationssicherheit und insbesondere eine hohe Datensicherheit und Datenintegrität vor allem der bankspezifischen Daten sicherstellt.

Das Problem ist durch das im Anspruch 1 bestimmte Verfahren sowie das im nebengeordneten Anspruch bestimmte System gelöst. Besondere Ausführungsarten der Erfindung sind in den Unteransprüchen bestimmt.

Die Erfindung ist bei einem Verfahren zur automatischen Abwicklung von Zahlungsvorgängen im Electronic Commerce über ein elektronisches Datennetz, bei dem ein Kunde mittels eines an das Datennetz angeschlossenen Kundenterminals über das Datennetz ein Kaufangebot an einen Händlerrechner eines Händlers überträgt, dadurch gelöst, daß für den Kunden bei der Abgabe des Kaufangebots eine Bezahlungsart wählbar oder vorgegeben ist, bei der ein erster Teil des Kaufpreises im Wege einer Überweisung entrichtet wird und ein zweiter Teil des Kaufpreises im Wege einer durch elektronische Übermittlung erteilten Einzugsermächtigung von einem Konto eines Geldinstitutes entrichtet wird.

Gegenüber der aus dem Stand der Technik bekannten Bezahlungsart der Erteilung einer Einzugsermächtigung für den gesamten Kaufpreis bietet das erfindungsgemäße Verfahren sowohl für den Kunden als auch für den Händler Vorteile. Für den Händler besteht nach dem Stand der Technik das Risiko, daß der Kunde die Einzugsermächtigung widerruft. Dieses Risiko ist durch die vorliegende Erfindung dadurch jedenfalls reduziert, daß zumindest ein Teil des Kaufpreises durch Überweisung erfolgt, die unmittelbar mit der Abgabe des Kaufangebots durch den Kunden disponierbar ist und/oder der Händler jedenfalls die Ware bzw. Dienstleistung erst liefert, wenn seitens des Überweisungsanbieters eine Bestätigung des Durchführens der Überweisung erfolgt ist.

Die erfindungsgemäße Kombination von Überweisung und Lastschrift für jeweils einen Teil des Kaufpreises führt auch dazu, daß auf Seiten des Geldinstituts, bei dem das Konto des Kunden geführt wird, der Überweisungsbetrag mehr oder weniger unmittelbar und unwiderrufbar abgebucht wird, während der Lastschriftbetrag erst dann abgebucht wird, wenn der Händler seine Einzugsermächtigung ausübt. Zwischen den Buchungstagen des Überweisungsanteils und des Lastschriftanteils können mehrere Tage, Wochen oder ein noch größerer Zeitraum liegen. Dies hat unmittelbare Auswirkungen auf viele technischen Aspekte des Kontostandes des Kunden, wie beispielsweise Sperren von Verfügungsberechtigungen infolge des Überschreitens von Kreditlinien, Absenden von Kontrollmitteilungen einschließlich Kontoauszügen aufgrund von Kontobewegungen und dergleichen.

Für den Kunden bietet das erfindungsgemäße Verfahren den Vorteil, daß es durch die von ihm gewählte Bezahlungsart gegenüber dem Händler eine Vertrauensbasis schafft und er dennoch jedenfalls im Umfang des durch Einzugsermächtigung zu entrichtenden zweiten Teils des Kaufpreises eine Rückrufmöglichkeit behält. Der gesamte Bezahlungsvorgang erfolgt auf elektronische Weise, d.h., es ist weder erforderlich, daß der Kunde einen persönlichen Kontakt zum Händler aufbaut, noch daß der Kunde einen persönlichen Kontakt zu seinem Geldinstitut aufbaut. In der Regel wird die Überweisung ebenfalls auf elektronische Weise übermittelt. Weiterhin wird vorzugsweise die Überweisung von einem Konto des Kunden bei seinem Geldinstitut erfolgen. Alternativ oder ergänzend ist auch die Überweisung von einem Konto, beispielsweise einem speziell hierfür eingerichteten Kundenkonto, bei einem Geldinstitut des Händlers möglich, beispielsweise bei der Hausbank des Händlers. Weiterhin vorzugsweise ergibt die Summe des ersten Teils und des zweiten Teils den gesamten, vom Kunden zu bezahlenden Kaufpreis.

In einer besonderen Ausführungsart der Erfindung ist der Kaufpreis abhängig vom ersten, im Wege der Überweisung zu entrichtenden Anteil des Kaufpreises. Insbesondere wird der Händler ausgehend von einem maximalen Kaufpreis einen Rabatt gewähren, der vorzugsweise abhängig ist von der vom Kunden gewählten Höhe des ersten, im Wege der Überweisung zu entrichtenden Anteils des Kaufpreises. Zu diesem Zweck kann der Händler eine Berechnungsfunktion P(u) vorgeben, mittels welcher der zu entrichtende Kaufpreis automatisch berechnet wird und an dem Kundenterminal angezeigt wird.

In einer besonderen Ausführungsart erfolgt die Berechnung des Kaufpreises am Ort des Kundenterminals, wobei zu diesem Zweck die Berechnungsfunktion am Ort des Kundenterminals elektronisch gespeichert ist. Dadurch kann der Datenverkehr über das Datennetz herabgesetzt werden, insbesondere ist es möglich, daß der Kunde sich über das Datennetz das gesamte Angebot den Händlers herunterlädt einschließlich der unter Umständen für die angebotenen Waren und Dienstleistungen individuellen Berechnungsfunktionen. Daraufhin kann die Datenverbindung unterbrochen werden und es ist jedenfalls kein weiterer Datenverkehr erforderlich. Nach einer Auswahl der Waren und/oder Dienstleistungen seitens des Kunden unter Verwendung der heruntergeladenen und gespeicherten Berechnungsfunktion kann der Kunde anschließend die Datenverbindung wieder aufbauen bzw. wieder aufnehmen und sein Kaufangebot an den Händlerrechner übertragen.

In einer besonderen Ausführungsart der Erfindung ist vom Händler eine untere Grenze und/oder eine obere Grenze für den ersten Teil des durch Überweisung zu entrichtenden Kaufpreises vorgebbar und/oder eine obere Grenze für den zweiten Teil des durch Einzugsermächtigung zu entrichtenden Kaufpreises vorgebbar. Der Händler hat die Möglichkeit, derartige obere und untere Grenzen einheitlich für alle Waren und/oder Dienstleistungen anzubieten, oder speziell nur für einige seiner Waren und/oder Dienstleistungen anzubieten. Die vom Händler vorgebbaren Grenzen können einheitlich für alle Waren und/oder Dienstleistungen gelten oder individuell für diese vorgegeben werden. Sämtliche unteren und/oder oberen Grenzen werden auf elektronischem Wege übermittelt und/oder gespeichert. Grundsätzlich ist weiterhin denkbar, daß die unteren und/oder oberen Grenzen für verschiedene Kunden unterschiedlich sind, und/oder abhängig sind von der jeweiligen Gesamtauftragssumme.

In einer besonderen Ausführungsart der Erfindung wird von dem Kunden an dem Kundenterminal der erste Teil und/oder der zweite Teil eingegeben, wobei die Eingabe vorzugsweise mittels eines grafischen Elements einer an dem Kundenterminal angezeigten Benutzeroberfläche erfolgt. Die Wahl der Höhe des ersten und/oder zweiten Teils kann dabei in vom Händler vorgegebenen Stufen oder stufenlos innerhalb der vom Händler vorgegebenen Grenzen erfolgen. Die im Kundenterminal vorzugsweise gespeicherte Berechnungsfunktion berechnet anhand der Eingabe des Kunden mittels des grafischen Elements in Echtzeit die daraus resultierenden Beträge und zeigt diese dem Kunden an, woraufhin dieser die elektronisch zu übermittelnde Überweisung autorisieren kann.

Die Ausführung der Überweisung nach dem erfindungsgemäßen Verfahren erfolgt automatisch unter Verwendung speziell hierfür entwickelter Datenverarbeitungsprogamme und Datenverarbeitungsgeräte, insbesondere seitens des Geldinstitutes, bei dem das Konto geführt ist, von dem aus die Überweisung getätigt werden soll. Die vom Kunden nach dem erfindungsgemäßen Verfahren beauftragte Überweisung hat demzufolge unmittelbaren Einfluß auf den Kontostand.

In einer besonderen Ausführungsart der Erfindung überträgt der Kunde mittels des Kundenterminals einen dem ersten Teil entsprechenden und mit einer Identifikationsinformation versehenen Überweisungsauftrag über das Datennetz an einen Dienstleistungsrechner eines Überweisungsanbieters, insbesondere des Geldinstituts, und der Überweisungsanbieter überprüft die Ausführbarkeit des Überweisungsauftrages automatisch. Bei einem positiven Ergebnis der Prüfung disponiert der Überweisungsanbieter den Zahlungsvorgang. Vorzugsweise wird der Lastschriftauftrag zusammen mit dem Überweisungsauftrag übertragen. Der Überweisungsanbieter ist weiter vorzugsweise gleichzeitig ein Lastschriftanbieter. Dementsprechend kann auch die Ausführbarkeit des Lastschriftauftrages automatisch geprüft werden.

In einer besonderen Ausführungsart der Erfindung ist der Händler bei dem Überweisungsanbieter als am Electronic Commerce teilnehmender Händler elektronisch registriert und der Überweisungsanbieter läßt dem Händler nach dem Disponieren des Zahlungsvorgangs automatisch und direkt, insbesondere ohne Umweg über das Kundenterminal, eine Mitteilung über den disponierten Zahlungsvorgang zukommen. Der Händler kann daraufhin und ggf. auch vollautomatisch das Liefern der Ware und/oder Bereitstellen der Dienstleistung veranlassen. In einer besonderen Ausführungsart der Erfindung erfolgt somit auch das Ausliefern der Ware bzw. Bereitstellen der Dienstleistung automatisch, ohne das hierfür seitens des Händlers ein Eingriff einer Person erforderlich ist.

Die Erfindung betrifft auch einen Computer, insbesondere ein Kundenterminal (2), einen Händlerrechner und/oder eine Datenverarbeitungsanlage bei dem Rechenzentrum des die Überweisung ausführenden Geldinstituts, der programmtechnisch eingerichtet ist zur Durchführung des in dieser Patentanmeldung und insbesondere vorstehend beschriebenen Verfahrens.

Die Erfindung betrifft auch ein System zur automatischen Abwicklung von Zahlungsvorgängen im Electronic Commerce, das ein elektronisches Datennetz, ein an dem Datennetz jedenfalls zeitweise angeschlossenes Kundenterminal, und einen an dem Datennetz jedenfalls zeitweise angeschlossenen Händlerrechner aufweist. Über das Datennetz ist von einem Kunden mittels des Kundenterminals ein Kaufangebot an den Händlerrechner übertragbar. In dem erfindungsgemäßen System ist von dem Kunden bei der Abgabe des Kaufangebotes eine Bezahlungsart wählbar oder die Bezahlungsart ist dem Kunden vom Händler vorgegeben, bei der ein erster Teil des Kaufpreises im Wege einer Überweisung entrichtet wird und ein zweiter Teil des Kaufpreises im Wege einer durch elektronische Übermittlung erteilten Einzugsermächtigung von einem Konto eines Geldinstitutes entrichtet wird.

Die Datenübertragung erfolgt elektronisch, d.h. es ist insbesondere keine persönliche Kontaktaufnahme zwischen dem Kunden, dem Händler und/oder dem Geldinstitut erforderlich. Die von dem Kunden gewählte Bezahlungsart kann auf Seiten des Kundenterminals, des Händlerrechners oder eines entsprechenden Ausgabeautomates bei dem Geldinstitut oder einem für dieses zuständigen Rechenzentrums dazu führen, daß eine Bestätigung und/oder ein Kontoauszug automatisch ausgedruckt wird und an den Kunden und/oder Händler auf elektronischem Wege und/oder per Briefpost versandt wird. Weiterhin kann an den Händlerrechner eine Logistiksteuerung angeschlossen sein bzw. von dem Händlerrechner angesteuert werden, durch welche die vom Kunden gewünschte Ware und/oder Dienstleistung automatisch und insbesondere ohne daß es hierfür eines Eingriffs einer Person seitens des Händlers bedarf, ausgeliefert bzw. bereitgestellt wird.

In einer besonderen Ausführungsart der Erfindung weist das Terminal elektronische Speichermittel auf, in denen eine Berechnungsfunktion speicherbar ist, von welcher der Kaufpreis abhängig vom ersten, im Wege der Überweisung zu entrichtenden Anteil des Kaufpreises automatisch berechenbar und an dem Kundenterminal anzeigbar ist.

Weitere Vorteile, Merkmale und Einzelheiten der Erfindung ergeben sich aus den Unteransprüchen sowie der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.

Fig. 1    zeigt eine mögliche Ausführungsform einer am Ort eines Kundenterminals dem Kunden angezeigten grafischen Benutzeroberfläche,

Fig. 2    zeigt eine grafische Darstellung der Abhängigkeit des prozentualen Rabatts d von der vom Kunden gewählten Höhe des ersten Teils u des durch Überweisung zu entrichtenden Kaufpreises,

Fig. 3    zeigt schematisch den Ablauf einer besonderen Ausführungsart des erfindungsgemäßen Verfahrens,

Fig. 4    zeigt ein Flussdiagramm des Prüfverfahrens im Dienstleistungsrechner,

Fig. 5    zeigt in einer etwas anschaulicheren Darstellung den Ablauf der besonderen Ausführungsart des erfindungsgemäßen Verfahrens, und

Fig. 6    zeigt ein erfindungsgemäßes System zur Überprüfung der Händlerregistrierung beim Kreditinsitut.

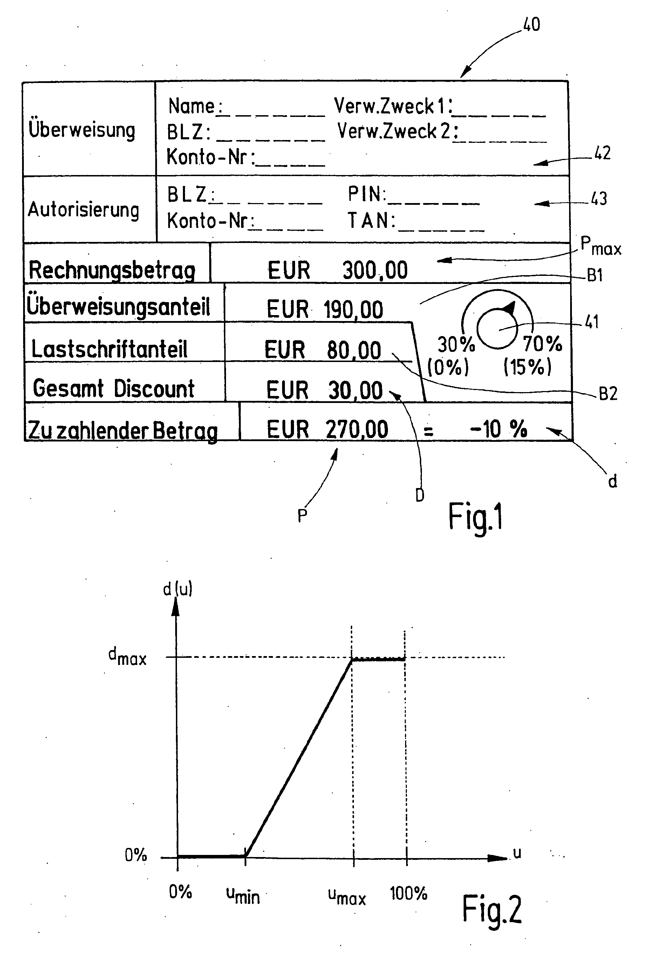

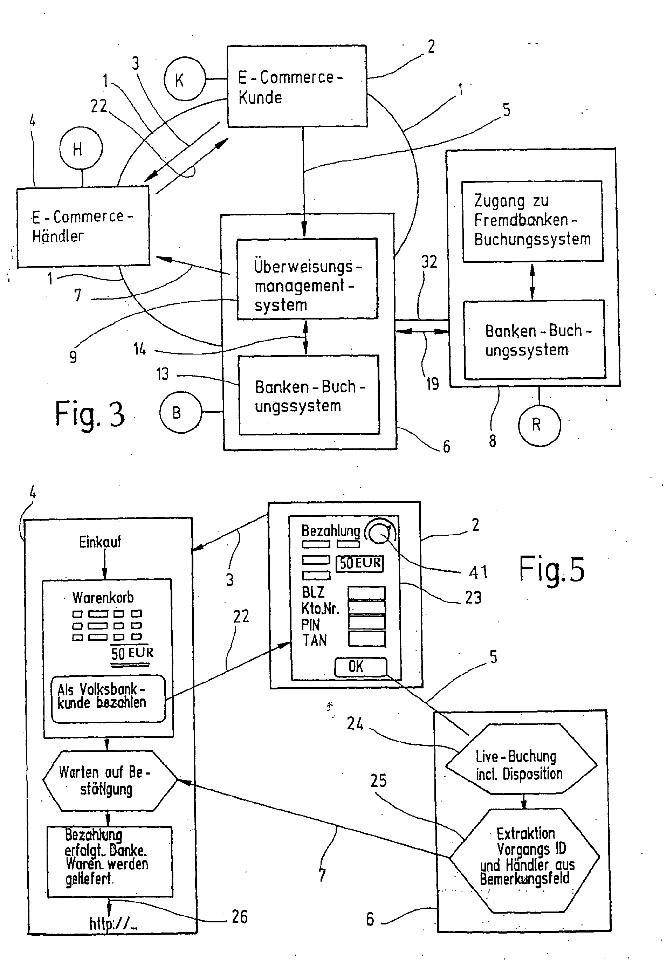

Die Figur 1 zeigt die am Ort eines Kundenterminals 2 (Fig.3) dem Kunden K angezeigte grafische Benutzeroberfläche 40. Anhand eines grafisch als Drehknopf 41 dargestellten Einstellmittels kann der Kunde K den ersten Teil u des durch Überweisung zu entrichtenden Kaufpreises P wählen und einstellen. Die Einstellung erfolgt mittels eines entsprechenden Eingabemittels des Kundenterminals 2, beispielsweise eines berührungsempfindlichen Bildschirmes, einer Computermaus oder dergleichen. Im dargestellten Ausführungsbeispiel ist vom Händler H eine untere Grenze umin von 30% und eine obere Grenze umax von 70% für den ersten Teil u des durch Überweisung zu entrichtenden Kaufpreises P vorgegeben. Je nach Wahl des ersten Teils u gewährt der Händler H einen Rabatt d zwischen 0% des maximalen Kaufpreises Pmax, für den Fall, daß der erste Teil u = umin = 30% beträgt, und einen maximalen Rabatt dmax in Höhe von 15% auf den maximalen Kaufpreis Pmax, für den Fall, daß der erste Teil u = umax = 70% beträgt.

Im dargestellten Ausführungsbeispiel beträgt der maximale Kaufpreis bzw. nominelle Rechnungsbetrag EUR 300,-. Durch die vom Kunden K vorgenommene Einstellung am Drehknopf 41 gewährt der Händler H auf den maximalen Kaufpreis einen Rabatt oder Discount d in Höhe von 10%, entsprechend einem Rabattbetrag D in Höhe von EUR 30,-. Hierfür ist es erforderlich, daß der Kunde K für den ersten Anteil u in Höhe von 70 %, entsprechend einem Überweisungsbetrag B1 von EUR 190,-, eine Überweisung in Auftrag gibt. Hierzu gibt er die im ersten Datenfeld 42 angefragten Angaben ein. Im zweiten Datenfeld 43 autorisiert er das beauftragte Geldinstitut bzw. dessen Rechenzentrum mittels des bekannten PIN/TAN-Verfahrens zum Ausführen der Überweisung.

Der zu zahlende Kaufpreis P beträgt im Ausführungsbeispiel EUR 270,-. Wie in den nachfolgenden Fig. 3 bis 6 noch eingehend beschrieben, wird jedenfalls ein Teil der in der grafischen Benutzeroberfläche 40 eingetragenen Informationen an einen Dienstleistungsrechner 6 (Fig. 3) eines Überweisungsanbieters B, insbesondere eines Rechenzentrums oder eines Geldinstituts übertragen. Außerdem wird ein Teil dieser Informationen an den Händlerrechner 4 übertragen, damit dieser die für den Einzug des zweiten Anteils e erforderlichen Informationen vorliegen hat.

Die Fig. 2 zeigt eine grafische Darstellung der Abhängigkeit des prozentualen Rabatts oder Discounts d in Abhängigkeit von der vom Kunden K gewählten Höhe des ersten Teils u des durch Überweisung zu entrichtenden Kaufpreises K. Dabei steigt der prozentuale Rabatt d zwischen einer vom Händler vorgegebenen unteren Grenze umin und einer oberen Grenze umax linear an. Unterhalb von umin beträgt der prozentuale Rabatt 0 und oberhalb von umax beträgt der prozentuale Rabatt dmax, beispielsweise 15%. Die Höhe des Rabatts d ist somit eine Funktion des ersten Teils u des durch Überweisung zu entrichtenden Kaufpreises K. Die Funktion d(u) ist vorzugsweise am Ort des Kundenterminals 2 elektronisch abgespeichert. Die Berechnung des Kaufpreises P erfolgt automatisch gemäß P = Pmax (1 - d(u)). Der durch Überweisung zu entrichtende Betrag B1 errechnet sich anschließend aus B1 = P x u. Der durch Lastschrift einzuziehende Betrag B2 berechnet sich entsprechend B2 = P x e = P x (1 - u).

Die Figuren 3 bis 6 zeigen eine besondere Ausführungsart des erfindungsgemäßen Verfahrens, bei dem der Vorgang der Überweisung auf besonders vorteilhafte und vorallem für den Händler Sicherheit gewährende Art ausgeführt wird.

Die Figur 3 zeigt schematisch den Ablauf des erfindungsgemäßen Verfahrens zur automatischen Abwicklung von Zahlungsvorgängen im Electronic Commerce über ein elektronisches Datennetz 1, bei dem ein Kunde K mittels eines Kundenrechners 2 über das Datennetz 1 ein Kaufangebot 3 an einen Händlerrechner 4 eines Händlers H überträgt. Der Kunde K überträgt mittels des Kundenrechners 2 weiterhin einen entsprechenden und mit einer Identifikationsinformation versehenen Überweisungsauftrag 5 über das Datennetz 1 an einen Dienstleistungsrechner 6 eines Überweisungsanbieters B, insbesondere eines Rechenzentrums oder eines Geldinstituts. Der Überweisungsanbieter B prüft die Ausführbarkeit und Korrektheit des Überweisungsauftrages 5 sowie die Übereinstimmung der Händlerdaten mit den im voraus registrierten Händlerdaten automatisch und disponiert bei positivem Ergebnis der Prüfung den Zahlungsvorgang.

Die Dispositionsprüfung umfasst insbesondere eine Prüfung, ob die erforderlichen Geldmittel vorhanden oder jedenfalls innerhalb des vorgegebenen Kreditrahmens liegen und/oder ob der Kunde K autorisiert ist, den Überweisungsauftrag zu verfügen. Sobald der Zahlungsvorgang disponiert ist, besteht für den Kunden K keine Widerrufsmöglichkeit. Dies gibt dem Händler H die Sicherheit, daß er im Falle eines disponierten Zahlungsvorgangs auch den disponierten Geldbetrag erhält. Der Händler H ist dabei bei dem Überweisungsanbieter B als am Electronic Commerce teilnehmender Händler H elektronisch gespeichert.

Der Überweisungsanbieter B lässt nach dem Disponieren des Zahlungsvorgangs dem Händler H automatisch und direkt, insbesondere ohne Umweg über den Kundenrechner 2, eine Mitteilung 7 über den disponierten Zahlungsvorgang zukommen.

Vorzugsweise führt der Kunde K beim Überweisungsanbieter B ein Konto, das online genutzt werden kann. Kundenrechner 2, Händlerrechner 4 und Dienstleistungsrechner 6 kommunizieren über das elektronische Datennetz 1 mittels eines sicheren Datenübertragungsprotokolls, beispielsweise gemäß dem Protokoll https.

Sofern der Kunde K eine Bank- bzw. Kontoverbindung für den Überweisungsauftrag nutzen möchte, die nicht im Zuständigkeitsbereich des Überweisungsanbieters B liegt, sondern im Zuständigkeitsbereich eines Fremdbuchungssystems 8 einer Rechenzentrale R oder eines Geldinstituts liegt, muss er in die Weitergabe bzw. Durchleitung der für die Ausführung des Überweisungsauftrages erforderlichen Daten an das Fremdbuchungssystem 8 einwilligen. Vorzugsweise erfolgt die Mitteilung 7 vom Dienstleistungsrechner 6 an den Händlerrechner 4 online, das heißt über das Datennetz 1. Kann oder will der Händler H die online-Mitteilung 7 über die Disponierung des Überweisungsauftrages nicht entgegennehmen, muss er auf anderem Wege informiert werden, beispielsweise indem er sich periodisch oder zu den von ihm gewählten Zeitpunkten die Daten beim Dienstleistungsrechner 6 über das Datennetz 1 abholt oder anderweitig zustellen lässt.

Nachfolgend ist der Ablauf einer besonderen Ausführungsart des erfindungsgemäßen Verfahrens eingehender beschrieben:

Der Kunde K führt einen online-Einkaufsvorgang beim Händler H durch, z. B. in dessen Internetangebot. Nach Zusammenstellung der zu kaufenden Waren bzw. Dienstleistungen wählt er das Angebot des Händlers H aus, die Bezahlung jedenfalls teilweise durch elektronische Überweisung durchzuführen, was der Händler H in seinem Internetauftritt durch einen speziell hierfür vorgesehenen Internet-Link oder einen Button ermöglicht. Daraufhin bekommt der Kunde K über den Link vom Überweisungsanbieter B folgende Information auf seinem Bildschirm angezeigt, vorzugsweise in Art und Form eines ihm bekannten Überweisungsformulars 23. Folgende Informationen, von denen einige nur optional sind, sind in dem im Link/Button hinterlegten URL (Uniform Resource Locator) enthalten, welcher die Übertragung beim Überweisungsanbieter B bzw. dessen Dienstleistungsrechner 6 auslöst:

1. Firma des Händlers H (optional)
2. Bankleitzahl und Kontonummer der Kontoverbindung des Händlers H (optional)
3. Name des Kreditinstituts des Händlers H (optional)
4. Betragskennzeichen (DM, EUR oder dergleichen), sofern erforderlich
5. zu überweisender Betrag
6. Freitext zur Beschreibung des Verwendungszwecks (optional)
7. Händlerkennzeichen 28, das der Händler H nach der Registrierung beim Überweisungsanbieter B von diesem mitgeteilt bekommen hat

8. Vorgangskennzeichen, das der Händler H vorzugsweise mittels eines Algorithmus automatisch für jeden Einkaufsvorgang eines Kunden K neu und eindeutig bestimmt hat

Alternativ oder teilweise ergänzend kann der Kunde K wenigstens ein Teil dieser Daten auch vom Dienstleistungsrechner 6 des Überweisungsanbieters B erhalten, an den der Kunde K eine Kopie jedenfalls eines Teils des Kaufangebots 3 abgesandt hat oder der vom Händlerrechner 4 über das eingegangene Kaufangebot 3 informiert worden ist und daraufhin einen Teil der erforderlichen Daten dem Kundenrechner 2 zur Verfügung stellt.

Die Daten zu Punkt 1. bis 6. werden vorzugsweise unverschlüsselt und für den Kunden verständlich in das Überweisungsformular eingetragen. Die Daten zu Punkt 7. und 8. sind gegebenenfalls so zu komprimieren, daß sie in dem zur Verfügung stehenden Textraum Platz finden. Eine Verschlüsselung dieser Daten ist empfehlenswert, aber nicht zwingend erforderlich, da das Vorgangskennzeichen des Händlers H, z. B. unter Einsatz eines Zeitstempels so definiert werden kann, daß ein Fälschungsversuch äußerst schwierig erscheint.

Der Kunde K muss den Überweisungsauftrag 5 nun lediglich mit seiner von ihm zu wählenden Kontoverbindung, beispielsweise der Bankleitzahl und der Kontonummer, und der entsprechenden Autorisierung, beispielsweise der PIN und der TAN vervollständigen. Anschließend kann er den Überweisungsauftrag an dem Dienstleistungsrechner 6 des Überweisungsanbieters B über das Datennetz 1 abschicken. Die Vervollständigung und Autorisierung kann alternativ oder ergänzend auch durch Verwendung einer so genannten digitalen Signatur erfolgen, beispielsweise mittels einer Chip- oder Magnetkarte, auf der die erforderlichen Daten gespeichert sind. Hierzu kann der Kundenrechner 2 einen Kartenleser oder ein sonstiges, geeignetes Eingabegerät aufweisen.

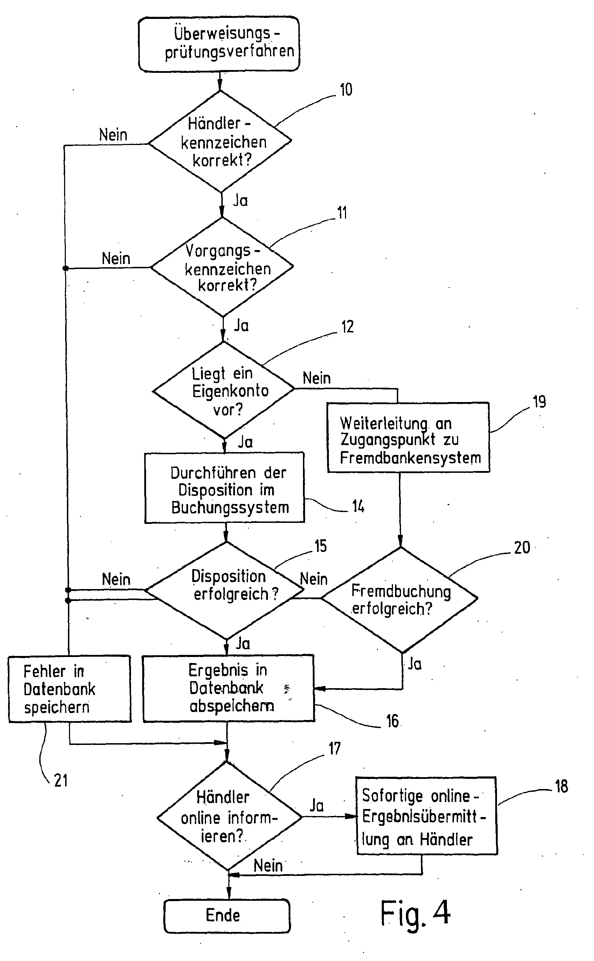

Die Überweisung wird dann vom Überweisungsmanagementsystem 9 des Überweisungsanbieters B in dem Dienstleistungsrechner 6 empfangen. Vor der Abarbeitung des in der Figur 4 dargestellten Prüfverfahrens ist das Händlerkennzeichen 28 und das Vorgangskennzeichen aus dem Verwendungszweck des Überweisungsauftrages 5 zu extrahieren und gegebenenfalls zu dekomprimieren.

Die Figur 4 zeigt ein Flussdiagramm des Prüfverfahrens im Dienstleistungsrechner 6. Die Korrektheitsprüfung 10 des Händlerkennzeichens kann insoweit erfolgen, daß das mit dem Überweisungsauftrag 5 erhaltene Händlerkennzeichen 28 mit den im Dienstleistungsrechner 6 gespeicherten Kennzeichen der registrierten Händler H verglichen wird und gegebenenfalls festgestellt wird, daß es sich bei dem empfangenden Händlerkennzeichen 28 um ein korrektes, d.h. ein Händlerkennzeichen eines registrierten Händlers H handelt. In einer Ausführungsart der Erfindung kann dabei nicht festgestellt werden, ob das Händlerkennzeichen 28 auch tatsächlich vom Händler H stammt. In einer abgewandelten Ausführungsart könnte jedoch dem Händlerkennzeichen 28 auch noch ein Identifikationsmittel entsprechend einer digitalen Signatur angehängt sein. Dann könnte nicht nur festgestellt werden, ob es sich um ein Händlerkennzeichen 28 eines registrierten Händlers H handelt, sondern ob dieses Händlerkennzeichen 28 auch tatsächlich vom registrierten Händler H stammt.

Die Korrektheitsprüfung 11 des Vorgangskennzeichens kann mindestens syntaktisch erfolgen. Wenn bestimmte Regeln zum Aufbau des Vorgangskennzeichens mit dem Händler H vorher vereinbart wurden, können auch semantische Integritätsprüfungen durchgeführt werden, beispielsweise ein Zeitstempel extrahiert werden und die Zeitdifferenz zwischen dem Zeitstempel und dem Zeitpunkt der Korrektheitsprüfung 11 ermittelt werden. Sind die beiden Korrektheitsprüfungen 10, 11 positiv ausgefallen, erfolgt die Eigenkontoprüfung 12 anhand der aus dem Überweisungsauftrag 5 extrahierten Bankleitzahl des Kunden K. Handelt es sich um eine Kontoverbindung, die in den Zuständigkeitsbereich des Banken-Buchungssystems 13 fällt, so liegt ein Eigenkonto vor und in diesem Fall erfolgt das Disponieren 14 im Bankenbuchungssystem 13 des Dienstleistungsrechners 6. Die Prüfung 15, ob die Disposition erfolgreich war, führt bei positivem Ergebnis zum Abspeichern 16 in einer Datenbank. Anschließend wird geprüft 17, ob gemäß den im Dienstleistungsrechner 6 abgespeicherten Informationen der Händler H online über das positive Prüfungsergebnis informiert werden kann oder will. Ist dies möglich und erwünscht, erfolgt online eine Mitteilung 18 an den Händler H über das elektronische Datennetz 1.

Ergibt die Eigenkontoprüfung 12, daß kein Eigenkonto vorliegt, erfolgt das Weiterleiten 19 an einen Zugangspunkt des Fremdbuchungssystems 8. Vom Fremdbuchungssystem 8 erhält man eine Rückmeldung, die daraufhin geprüft 20 wird, ob die Fremdbuchung erfolgreich war. Wenn ja, erfolgt das Abspeichern 16 in der Datenbank.

Für den Fall, daß die Korrekturprüfung 10 des Händlerkennzeichens 28, die Korrekturprüfung 11 des Vorgangskennzeichens, die Dispositionsprüfung 15 und/oder die Fremdbuchungsprüfung 20 nicht erfolgreich war, werden die Verarbeitungsfehler in der Datenbank abgespeichert 21. Danach erfolgt ebenfalls die Prüfung 17, ob der Händler H von dem negativen Ausgang der Prüfung informiert werden soll.

Das Weiterleiten 19 der Überweisungsdaten an das Fremdbuchungssystem 8 erfolgt entweder über eine Verbindung in einem Intranet, beispielsweise einem Interbankennetzwerk, oder über einen öffentlichen Zugangspunkt, beispielsweise durch Nutzung der Bildschirmtext (BTX)- oder Internet-Angebote einer anderen Bank mit einem Programm, das sich als Benutzer verhält und die Überweisungsdaten automatisch in die dafür vorgesehenen Felder einträgt. Das Abspeichern der Dispositionsergebnisse und möglicher sonstiger Fehler erfolgt in der Datenbank mit dem Ziel der Nachvollziehbarkeit der Überweisungen bzw. Fehlersituationen. Ob der Händler H über das Ergebnis der Überweisung online informiert werden soll, kann zum Registrierungszeitpunkt des Händlers H festgelegt werden. Ein negatives Ergebnis einer der Korrektheitsprüfungen 10, 11, 15, 20 kann beispielsweise als Folge eines Übermittlungsfehlers oder eines Betrugsversuches auftreten. In beiden Fällen sind alle zu diesem Zeitpunkt ermittelbaren Daten des Kunden K, insbesondere dessen Internetprotokoll (IP)-Adresse, eingegebene Daten usw., zur späteren Identifikation oder Fehlerverfolgung abzuspeichern.

Eine online-Zustellung der Mitteilung 7 betreffend den erfolgreich disponierten Zahlungsvorgang setzt voraus, daß das Electronic Commerce-System des Händlers H gegenüber dem Stand der Technik modifiziert ist, um derartige Mitteilungen 18 erhalten zu können und automatisch auswerten zu können. Der Liefervorgang des Händlers H an den Kunden K kann durch den Empfang und die automatische Auswertung der erhaltenen online-Mitteilung 18 automatisch angestoßen werden. Für den Händler H wird eine solche Modifikation seines Electronic Commerce-Systems in der Regel auch deshalb wünschenswert sein, da er damit einerseits den Kunden K über den Erfolg der Überweisung informieren kann und andererseits die sofortige Information über den unwiderruflichen Zahlungsvorgang für die interne Folgebearbeitung verwenden kann, beispielsweise um Waren sofort ausliefern zu können ohne das Risiko, daß der Zahlungsvorgang nicht, nicht korrekt und/oder zu spät erfolgt. Sollte der Händler H keine online-Mitteilungen 18 wünschen und/oder empfangen können, so kann die Mitteilung 7 auf anderem Wege zugestellt werden, beispielsweise per Fax und/oder Briefpost. Eine weitere Möglichkeit besteht darin, daß der Dienstleistungsrechner 6 die Mitteilung 7 elektronisch abrufbar bereitstellt. Dieser Abruf kann seitens des Händlers H strukturiert, beispielsweise per Datenschnittstelle, oder unstrukturiert, durch Aufruf auf einer Benutzeroberfläche auf dem Händlerrechner 4, erfolgen. Damit ist der Händler H in der Lage, zu den von ihm frei wählbaren Zeiten die Mitteilungen 7 über die zu erfolgenden Zahlungseingänge seiner Kunden K abzufragen.

Die Mitteilungen 7 des Überweisungsanbieters B an den Händler H umfasst beispielsweise folgende Daten:

a) Vorgangskennzeichen
b) Zahlbetrag, der disponiert wurde
c) Kontoverbindung des Empfängerkontos, insbesondere Bankleitzahl und Kontonummer
d) Ergebnis der elektronisch veranlassten Überweisung, im Fehlerfall eine entsprechende Fehlermeldung
e) Aus Sicherheitsgründen ist es vorteilhaft, die Internetprotokoll (IP)-Adresse des Kunden K, sofern im Hinblick auf die Proxyproblematik möglich, ebenfalls mitzuteilen. Dadurch könnte geprüft werden, ob der Kunde K, der die Überweisung ausgeführt hat, auch der Kunde ist, der im Electronic Commerce-System des Händlers H eingekauft hat.

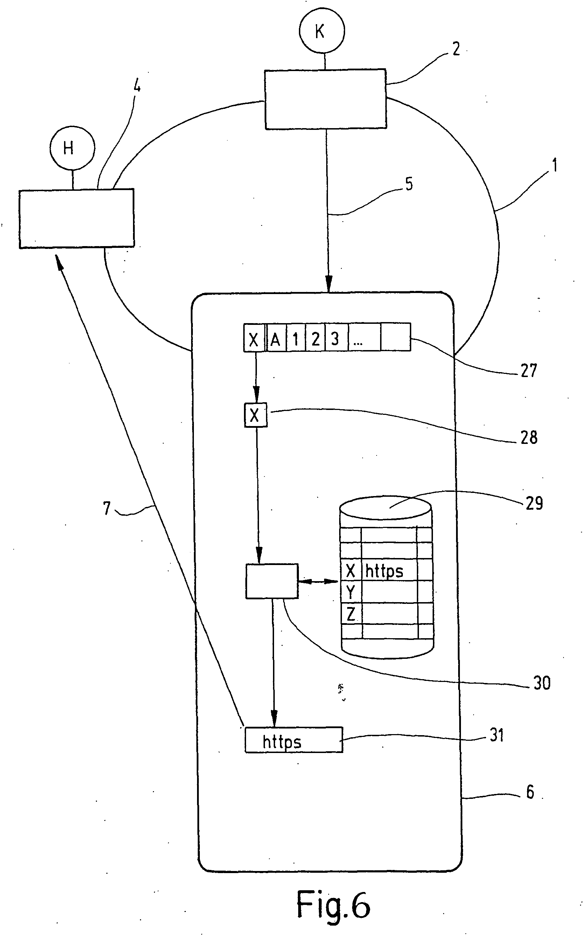

Die Figur 5 zeigt in einer etwas anschaulicheren Darstellung den Ablauf des erfindungsgemäßen Verfahrens. In dem dargestellten Beispiel ist keine Weiterleitung an ein Fremdbuchungssystem 8 erforderlich und die Mitteilung 7 erfolgt online direkt an den Händlerrechner 4 über das öffentliche Datennetz 1.

Zunächst erteilt der Kunde K mittels seines Kundenrechners 2 über das elektronische Datennetz 1 ein Kaufangebot 3, das für bestimmte in einen sogenannten Warenkorb eingelegte Waren und Dienstleistungen einen Gesamtkaufwert von EUR 50,- ergibt. Der Kunde K wählt als Bezahloption "als Volksbankkunde bezahlen". Daraufhin erhält der Kundenrechner 2 über das elektronische Datennetz 1 vom Händlerrechner 4 eine Händlermitteilung 22, die einige händlerspezifische und/oder vorgangsspezifische Informationen enthält. Diese Informationen werden auf dem Kundenrechner 2 in einer Art Überweisungsformular 23 dargestellt, das vom Dienstleistungsrechner 6 übermittelt wird, und in das der Kunde noch die Bankleitzahl (BLZ), Kontonummer (Kto.-Nr.), seine persönliche Identifikationsnummer (PIN) und eine Transaktionsnummer (TAN) eintragen muss bzw. von einem entsprechenden Anwendungsprogramm automatisch eintragen lassen kann. Im letztgenannten Fall ist beispielsweise die TAN in dem Kundenrechner 2 abgespeichert. Die Händlermitteilung 22, kann beispielsweise wie folgt aussehen :

https://volksbank.de/bezahlung?betrag = 50 + sessionid = 222 +

haendlerid =X...

Der Bestandteil "volksbank.de" steht für den Internet-Namen des Dienstleistungsrechners 6 des Überweisungsanbieters B. Darin ist bereits die Adresse für den Überweisungsauftrag 5 enthalten, der lediglich um die vom Kunden K in das Überweisungsformular 23 eingetragenen Informationen ergänzt wurde und beispielsweise wie folgt aussieht:

https://volksbank.de/ueberweisungsundlastschriftausfuehrung?

uebetrag=... + labetrag=...

+tan =... + sessionid =... + haendlerid =...

Bei dem vorstehend Genannten handelt es sich um die komplette Überweisungs-/Lastschriftorder. Im Dienstleistungsrechner 6 erfolgt eine Livebuchung einschließlich Disposition 24 sowie eine Extraktion 25 des Vorgangskennzeichens und des Händlerkennzeichens 28. Parallel hierzu erfolgt die Weitergabe der autorisierten Lastschrift an den Händler zum späteren Einzug. Insbesondere aus dem Händlerkennzeichen 28 wird die Adresse für das Absenden der Mitteilung 7 ermittelt, die beispielsweise wie folgt lautet:

https://haendler.de/ueberweisungsundlastschriftbestaetigung?

sessionid = ... + status = ok

Der Händlerrechner 4 wartet auf diese Mitteilung 7 als Bestätigung für das Zustandekommen des Kaufvertrages. Wird dies durch die Mitteilung 7 bestätigt, erfolgt die zweite Händlermitteilung 26 an den Kunden K, daß die Bezahlung erfolgt und die Waren geliefert werden. Diese Mitteilung kann beispielsweise an eine Internetadresse des Kunden K abgesandt, beispielsweise auch als E-Mail, werden oder vorzugsweise unmittelbar beim Kunden K angezeigt werden.

Die Figur 6 zeigt eine erfindungsgemäße Vorrichtung im Dienstleistungsrechner 6 des Überweisungsanbieters B. Aus dem Datenfeld 27 des eingehenden Überweisungsauftrages 5 wird das Händlerkennzeichen 28 extrahiert. Auf einem Speicherelement 29 sind die Kennzeichen der beim Überweisungsanbieter B registrierten Händler H elektronisch in digitaler Form gespeichert und jeweils einer Adresse des Händlers H im elektronischen Datennetz 1 zugeordnet. Ein Vergleicher 30 vergleicht nun das extrahierte Händlerkennzeichen 28 mit den gespeicherten Händlerkennzeichen. Im Falle der Feststellung einer Übereinstimmung wird die zu dem übereinstimmenden abgespeicherten Händlerkennzeichen gespeicherte Adressinformation extrahiert und die Mitteilung 7 über einen sicheren Datenkanal, beispielsweise unter Verwendung des "https"-Protokolls, an den Händler H unter der extrahierten Adresse 31 abgesandt.

Zusammengefaßt ist das bevorzugte Verfahren dadurch gekennzeichnet,

- daß der Händler (H) nach Erhalt der Mitteilung (7) des Überweisungsanbieters (B) dem Kundenrechner (2) über das Datennetz (1) eine Händlermitteilung (26) über den zustande gekommenen Kaufvertrag und die zu erfolgende Lieferung der gekauften Ware oder Dienstleistung und/oder die Ware selbst, sofern es sich dabei um Daten handelt, zukommen läßt,
- daß der Händler (H) mittels des Händlerrechners (4) auf das Kaufangebot des Kunden (K) dem Kundenrechner (2) über das Datennetz (1) einen die zu tätigende Überweisung repräsentierenden Datensatz übermittelt, der ein eindeutiges digitales Händlerkennzeichen (28) und ein eindeutiges und digitales Vorgangskennzeichen aufweist,
- daß vor dem Disponieren des Überweisungsauftrages und Weitergabe des Lastschriftauftrages im Dienstleistungsrechner (6) das Händlerkennzeichen (28) und das Vorgangskennzeichen extrahiert werden,
- daß das Disponieren (24) nur erfolgt, wenn zwischen dem Zeitpunkt des Prüfens des Vorgangskennzeichens im Dienstleistungsrechner (6) und dem Zeitstempel eine vorgebbare Zeitdifferenz liegt, und/oder
- daß das Händlerkennzeichen (28) durch Vergleich mit für die registrierten Händler (H) im Dienstleistungsrechner (6) gespeicherten Händlerkennzeichen geprüft wird.

**Patentansprüche**

1. Verfahren zur automatischen Abwicklung von Zahlungsvorgängen im Electronic Commerce über ein elektronisches Datennetz (1), bei dem ein Kunde (K) mittels eines an das Datennetz (1) angeschlossenen Kundenterminals (2) über das Datennetz (1) ein Kaufangebot (3) an einen Händlerrechner (4) eines Händlers (H) überträgt, **dadurch gekennzeichnet, daß** für den Kunden (K) bei der Abgabe des Kaufangebots (3) an dem Kundenterminal (2) eine Bezahlungsart wählbar oder vorgegeben ist, bei der ein erster Teil (u) des Kaufpreises (P) im Wege einer durch elektronische Datenübertragung in Auftrag gegebenen Überweisung entrichtet wird und ein zweiter Teil (e) des Kaufpreises (P) im Wege einer durch elektronische Datenübertragung erteilten Einzugsermächtigung von einem Konto eines Geldinstitutes entrichtet wird.

2. Verfahren nach Anspruch 1, **dadurch gekennzeichnet, daß** der Kaufpreis (P) abhängig ist vom ersten Anteil (u) des Kaufpreises (P), der im Wege der Überweisung entrichtet wird, und daß der Kaufpreis (P) ausgehend von einem maximalen Kaufpreis (Pmax) gemäß einer elektronisch gespeicherten Berechnungsfunktion P(u) automatisch berechnet wird und an dem Kundenterminal (2) angezeigt wird.

3. Verfahren nach Anspruch 2, **dadurch gekennzeichnet, daß** die Berechnung des Kaufpreises (P) am Ort des Kundenterminals (2) erfolgt, und daß zu diesem Zweck die Berechnungsfunktion am Ort des Kundenterminals (2) elektronisch gespeichert ist.

4. Verfahren nach Anspruch 2 oder 3, **dadurch gekennzeichnet, daß** vom Händler (H) eine untere Grenze (umin) und eine obere Grenze (umax) für den ersten Teil (u) des durch Überweisung zu entrichtenden Kaufpreises (P) vorgegeben ist, oder eine untere Grenze (emin) und eine obere Grenze (emax) für den zweiten Teil (e) des durch Einzugsermächtigung zu entrichtenden Kaufpreises (P) vorgegeben ist.

5. Verfahren nach einem der Ansprüche 1 bis 4, **dadurch gekennzeichnet, daß** von dem Kunden (K) an dem Kundenterminal (2) der erste Teil (u) und/oder der zweite Teil (e) eingegeben wird.

6. Verfahren nach Anspruch 5, **dadurch gekennzeichnet, daß** die Eingabe mittels eines graphischen Elements einer an dem Kundenterminal (2) angezeigten Benutzeroberfläche erfolgt.

7. Verfahren nach einem der Ansprüche 1 bis 6, **dadurch gekennzeichnet, daß** der Kunde (K) mittels des Kundenterminals (2) weiterhin einen dem ersten Teil (u) entsprechenden und mit einer Identifikationsinformation versehenen Überweisungs- und Lastschriftauftrag (5) über das Datennetz (1) an einen Dienstleistungsrechner (6) eines Überweisungs- und Lastschriftanbieters (B), insbesondere des Geldinstituts, überträgt, und der Überweisungs- und Lastschriftanbieter (B) die Ausführbarkeit des Überweisungs- und Lastschriftauftrags automatisch prüft und bei positivem Ergebnis der Prüfung den Zahlungsvorgang disponiert (24).

8. Verfahren nach Anspruch 7, **dadurch gekennzeichnet, daß** der Händler (H) bei dem Überweisungs- und Lastschriftanbieter (B) als am Electronic Commerce teilnehmender Händler (H) elektronisch registriert ist und daß der Überweisungs- und Lastschriftanbieter (B) nach dem Disponieren (24) des Zahlungsvorgangs dem Händler (H) automatisch und direkt und insbesondere ohne Umweg über das Kundenterminal (2) eine Mitteilung (7) über den disponierten Zahlungsvorgang zukommen lässt.

9. Computer, insbesondere Kundenterminal (2), programmtechnisch eingerichtet zur Durchführung des Verfahrens nach einem der Ansprüche 1 bis 8.

10. System zur automatischen Abwicklung von Zahlungsvorgängen im Electronic Commerce aufweisend ein elektronisches Datennetz (1), ein an dem Datennetz (1) angeschlossenes Kundenterminal (2), und einen an dem Datennetz (1) angeschlossenen Händlerrechner (4), wobei über das Datennetz (1) von einem Kunden (K) mittels des Kundenterminals (2) ein Kaufangebot (3) an den Händlerrechner (4) eines Händlers (H) übertragbar ist, **dadurch gekennzeichnet, daß** für den Kunden (K) bei der Abgabe des Kaufangebots (3) an dem Kundenterminal (2) eine Bezahlungsart wählbar oder vorgegeben ist, bei der ein erster Teil (u) des Kaufpreises (P) im Wege einer durch elektronische Datenübertragung in Auftrag gegebenen Überweisung entrichtet wird und ein zweiter Teil (e) des Kaufpreises (P) im Wege einer durch elektronische Datenübertragung erteilten Einzugsermächtigung von einem Konto eines Geldinstitutes entrichtet wird.

11. System nach Anspruch 10, **dadurch gekennzeichnet, daß** das Kundenterminal (2) elektronische Speichermittel aufweist, in denen eine Berechnungsfunktion K(u) speicherbar ist, daß der Kaufpreis (P) abhängig ist vom ersten Anteil (u) des Kaufpreises (P), der im Wege der Überweisung entrichtet wird, und daß der Kaufpreis (P) ausgehend von einem maximalen Kaufpreis (Pmax) gemäß der elektronisch gespeicherten Berechnungsfunktion P(u) automatisch berechenbar und an dem Kundenterminal (2) anzeigbar ist.

| Überweisung | Name: _ _ _ _ _ _  Verw.Zweck 1: _ _ _ _ _ _<br>BLZ: _ _ _ _ _ _ _  Verw.Zweck 2: _ _ _ _ _ _<br>Konto-Nr: _ _ _ _ _ | |
| Autorisierung | BLZ: _ _ _ _ _ _ _  PIN: _ _ _ _ _ _<br>Konto-Nr: _ _ _ _  TAN: _ _ _ _ _ _ | |
| Rechnungsbetrag | EUR   300,00 | |
| Überweisungsanteil | EUR  190,00 | |
| Lastschriftanteil | EUR   80,00 | 30%   70%<br>(0%)  (15%) |
| Gesamt Discount | EUR   30,00 | |
| Zu zahlender Betrag | EUR  270,00 | ≙   −10 % |

Fig.1

Fig.2

## Fig. 3

E - Commerce - Kunde

K

2

3

1

22

4

H

E - Commerce - Händler

1

7

9

14

13

B

Überweisungs - management - system

Banken - Buch - ungssystem

5

1

32

19

6

Zugang zu Fremdbanken - Buchungssystem

Banken - Buch - ungssystem

8

R

## Fig. 5

4

Einkauf

Warenkorb

50 EUR

Als Volksbank - kunde bezahlen

Warten auf Be - stätigung

Bezahlung erfolgt. Danke. Waren werden geliefert.

http://...

26

3

22

Bezahlung

50 EUR

BLZ
Kto.Nr.
PIN
TAN

OK

2

41

23

24

25

5

Live - Buchung incl. Disposition

Extraktion Vorgangs ID und Händler aus Bemerkungsfeld

7

6

Fig. 4

Fig.6